# EUROPEAN PATENT APPLICATION

(11) **EP 1 605 254 A1**
(43) Date of publication of application: **14.12.2005**
(21) Application number: 04720725.3
(22) Date of filing: 15.03.2004
(51) Int. Cl.: G01N 27/327, G01N 27/28, G01N 33/66

(54) **ANALYZING TOOL WITH EXHAUST PORT**

(30) Priority: 14.03.2003 JP 2003069353
(71) Applicant: ARKRAY INC., Kyoto-shi, Kyoto 601-8045 (JP)
(72) Inventor: KUSAKA, Yasuhide, c/o ARKRAY, Inc., Kyoto-shi Kyoto 601-8045 (JP); KOBAYASHI, Taizo, c/o ARKRAY, Inc., Kyoto-shi Kyoto 601-8045 (JP)
(74) Representative: Pluckrose, Anthony William
(86) International application number: PCT/JP2004/003448
(87) International publication number: WO 2004/081553

(57) **Abstract**

The invention provides a vented analyzing tool including a flow path provided on a substrate so as to move a specimen in a specific direction. The flow path has a predetermined dimension in a widthwise direction orthogonal to the specific direction when viewed thicknesswise of the substrate. The analyzing tool further includes a discharge port through which gas inside the flow path is vented. An edge of the discharge port on an upstream side in the moving direction of the specimen includes a rectilinear portion extending in the widthwise or generally widthwise direction. The flow path is constituted so as to cause a central portion of the specimen in the widthwise direction to move faster than the remaining portion thereof.

## Description

### TECHNICAL FIELD

The present invention relates to an analyzing tool used for analyzing a specific component (for example glucose, cholesterol or lactic acid) contained in a specimen (for example a biochemical specimen such as blood or urine).

### BACKGROUND ART

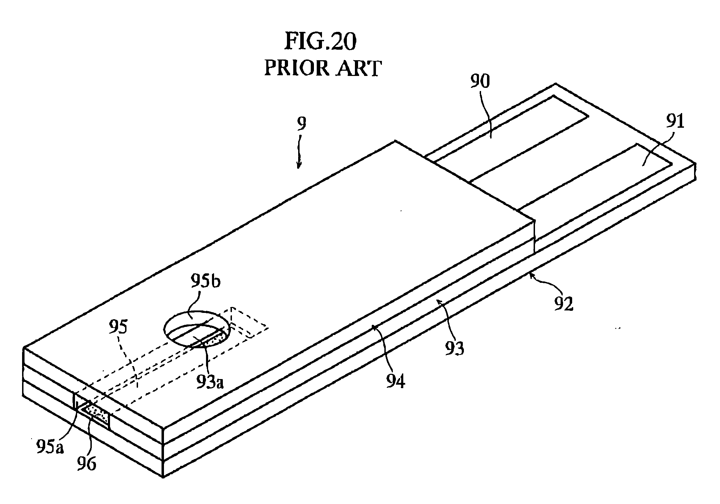

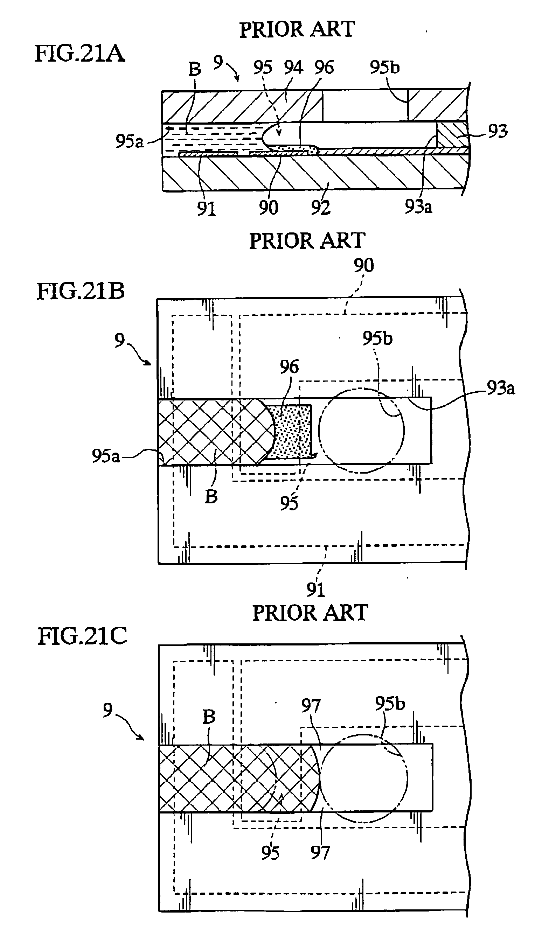

For simply measuring glucose concentration in the blood, a disposable glucose sensor is popularly utilized (Ref. JP-A No.H08-10208, for example). Some glucose sensors are designed to electrochemically measure the glucose concentration, as shown in Figs. 20, 21A and 21B. The glucose sensor 9 shown therein include a working electrode 90 and a counter electrode 91, which serve to measure a response current value necessary for calculating a blood glucose level. The glucose sensor 9 includes a substrate 92, on which a cover 94 is stacked via a spacer 93 including a slit 93a. On the substrate 92, a flow path 95 is defined by the elements 92 to 94. The flow path 95, which serves to move the blood by a capillary action, includes an intake port 95a through which the blood is introduced, and a discharge port 95b through which a gas inside the flow path 95 is discharged when the blood moves inside the flow path 95.

In the glucose sensor 9, a surface of the cover 94 facing the flow path 95 is usually hydrophilized to facilitate the blood to properly flow through the flow path 95. The substrate 92 is provided thereon with a reagent layer 96 containing an oxidoreductase and an electron carrier. The reagent layer 96 is granted high dissolubility so that a liquid phase reaction system is constituted inside the flow path 95, once the blood is introduced. Accordingly, a surface of the substrate 92 corresponding to the flow path 95 is also set substantially hydrophilic, by the reagent layer 96.

Thus in the glucose sensor 9, because of the hydrophilized finish of the cover 94 and the presence of the highly soluble reagent layer 96 on the substrate 92, the blood more easily advances along the surfaces of the substrate 92 and the cover 94 facing the flow path 95, than along a surface of the spacer 93 facing the flow path 95 (an inner wall of the slit 93a). Accordingly, when the blood B is introduced into the flow path 95, a portion of the blood B closer to the surfaces of the substrate 92 and the cover 94 advances faster than a central portion of the blood B, when viewed laterally as shown in Fig. 21A. Likewise, in a plan view as shown in Fig. 21B, a central portion of the blood B in a widthwise direction of the flow path 95 advances faster than side edge portions. The intrusion of the blood B once finishes when the blood reaches an edge of the discharge port 95b, as shown in Fig. 21C.

As may be apparent in view of Fig. 21A, the introduction of the blood into the flow path 95 causes dissolution of the reagent layer 96 and composition of a liquid phase reaction system. The liquid phase reaction system can be subjected to a voltage applied between the working electrode 90 and the counter electrode 91, and the response current can be measured by the working electrode 90 and the counter electrode 91. The response current value can be construed to reflect the electron exchange amount between the electron carrier in the liquid phase reaction system and the working electrode 90. Therefore, the response current value is relative to the amount (concentration) of the electron carrier present around the working electrode 90, and which can exchange electrons between the working electrode 90.

Generally, the discharge port 95b is of a circular shape as shown in Fig. 20. With such a discharge port 95b, however, when the blood advances in a form as shown in Fig. 21B, the blood B may not completely reach the edge of the discharge port 95b, and thus a void 97, where the blood is not provided, may be produced at the side edge portions of the flow path 95, as shown in Fig. 21C. In such a case, the blood B may gradually move with time, or may suddenly move, so as to fill the void 97. If this happens during the measurement of the response current, the amount (concentration) of the electron carrier present around the working electrode 90 drastically changes, thus shifting the measured response current value from a value that is supposed to be obtained. Since such movement of the blood B does not necessarily take place in each measurement of the blood glucose, and besides the timing of such movement of the blood B is different in each glucose sensor, the instability of the movement of the blood B significantly affects the measurement reproducibility of the response current, and hence the reproducibility of the blood glucose calculated based thereon.

### DISCLOSURE OF THE INVENTION

Accordingly, it is an object of the present invention to improve the reproducibility of specimen analysis results, in an analyzing tool including a flow path through which the specimen is moved.

A first aspect of the present invention provides a vented analyzing tool, comprising a flow path provided on a substrate so as to move a specimen in a specific direction, the flow path having a predetermined dimension in a widthwise direction orthogonal to the specific direction when viewed thicknesswise of the substrate, the analyzing tool further including a discharge port through which gas inside the flow path is vented, wherein an edge of the discharge port on an upstream side in the moving direction of the specimen includes a rectilinear portion extending along the widthwise or generally widthwise direction.

The flow path is designed so as to cause a central portion of the specimen in the widthwise direction to move faster than remaining portions thereof.

Preferably, the rectilinear portion has a dimension equal or generally equal to, or larger than the widthwise dimension of the flow path.

The discharge port may be polygonal. The discharge port may typically be rectangular or triangular. The discharge port may be otherwise shaped such as semi-circular.

A second aspect of the present invention provides a vented analyzing tool, comprising a flow path provided on a substrate so as to move a specimen in a specific direction, the flow path having a predetermined dimension in a widthwise direction orthogonal to the specific direction when viewed thicknesswise of the substrate, and the analyzing tool further including a discharge port through which gas inside the flow path is vented, wherein the flow path is designed so as to cause a central portion of the specimen in the widthwise direction to move faster than remaining portions thereof, and a central portion of an edge of the discharge port on an upstream side in the moving direction of the specimen is concave toward a downstream side in the moving direction of the specimen, with respect to the widthwise end portions.

The concave portion may be arcuate.

The analyzing tool according to the first and the second aspects may include a cover stacked on the substrate, so that the substrate and the cover define the flow path. In this case, the cover is provided with a through-hole penetrating in the thicknesswise direction, which serves as the discharge port.

The cover may be stacked on the substrate via a spacer. In this case, the spacer also defines the flow path. The portion of the flow path corresponding to the spacer is set to be more hydrophobic than the remaining portions thereof.

A third aspect of the present invention provides a vented analyzing tool, comprising a flow path provided on a substrate so as to move a specimen in a specific direction, the flow path having a predetermined dimension in a widthwise direction orthogonal to the specific direction when viewed in a thicknesswise direction of the substrate, the analyzing tool further including a discharge port through which as inside the flow path is vented, wherein a portion of the edge of the discharge port on the upstream side in the moving direction of the specimen conforms in shape to a front end portion of the specimen moving inside the flow path, when viewed thicknesswise of the substrate.

A fourth aspect of the present invention provides a vented analyzing tool, comprising a flow path provided on a substrate so as to move a specimen in a specific direction, the flow path having a predetermined dimension in a widthwise direction orthogonal to the specific direction when viewed thicknesswise of the substrate, the analyzing tool further including a discharge port through which gas inside the flow path is vented, wherein the flow path is designed so as to cause a central portion of the specimen in the widthwise direction to move faster than remaining portions thereof, and the flow path includes a stopper section located at an end portion including a portion corresponding to the discharge port, so as to block a flow of the specimen at end portions in the widthwise direction inside the flow path.

The analyzing tool according to the fourth aspect may include a cover stacked on the substrate via a spacer provided with a slit, so that the substrate, the spacer and the cover define the flow path. In this case, the stopper section may be formed by making the slit narrower in the widthwise direction at a position close to the discharge port, inside a portion defining the flow path, than in a portion close to an intake port of the specimen.

The stopper section may include a first stopper and a second stopper projecting in the widthwise direction toward an inner portion of the flow path, so as to oppose each other with an interval.

The first and the second stoppers may include a rectilinear portion on the upstream side in the moving direction of the specimen, extending along the widthwise direction or generally along such direction. The first and the second stoppers may alternatively include an arcuate portion, on the upstream side in the moving direction of the specimen.

In the analyzing tool according to the first to the fourth aspects, the flow path may be constituted so as to move the specimen by capillary action. Obviously, a pumping force may be employed instead, to drive the specimen inside the flow path.

### BRIEF DESCRIPTION OF THE DRAWINGS

Fig. 1 is a perspective view showing an entirety of a glucose sensor according to a first embodiment of the present invention;
Fig. 2 is an exploded perspective view of the glucose sensor shown in Fig. 1;
Fig. 3 is a cross-sectional view taken along the line III-III of Fig. 1;
Fig. 4 is a fragmentary plan view showing an end portion of the glucose sensor of Fig. 1 with its cover removed;
Fig. 5 is a cross sectional view similarly taken to Fig. 3, for explaining a flow of blood in the glucose sensor;
Fig. 6 is a plan view showing the same portion as Fig. 4, for explaining a flow of blood in the glucose sensor;
Fig. 7 is a plan view showing the same portion as Fig. 4, for explaining a flow of blood in the glucose sensor;
Figs. 8A and 8B are perspective views showing different examples of the glucose sensor;
Fig. 9 is a perspective view showing an entirety of a glucose sensor according to a second embodiment of the present invention;
Fig. 10 is a plan view showing the same portion as Fig. 4, for explaining a state where the blood has stopped moving in the glucose sensor;
Fig. 11 is a perspective view showing an entirety of a glucose sensor according to a third embodiment of the present invention;
Fig. 12 is a fragmentary plan view corresponding to Fig. 4, showing an end portion of the glucose sensor of Fig. 11;
Figs. 13A and 13B are plan views corresponding to Fig. 4, showing an end portion of the glucose sensor for explaining different examples of a stopper;
Figs. 14A to 14C are time course graphs showing measurement results of response currents according to a first inventive example;
Figs. 15A to 15C are time course graphs showing measurement results of response currents according to a second inventive example;
Figs. 16A to 16C are time course graphs showing measurement results of response currents according to a third inventive example;
Figs. 17A to 17C are time course graphs showing measurement results of response currents according to a first comparative example;
Figs. 18A to 18C are time course graphs showing measurement results of response currents according to a second comparative example;
Figs. 19A to 19C are time course graphs showing measurement results of response currents according to a third comparative example;
Fig. 20 is a perspective view showing an entirety of a conventional glucose sensor; and
Figs. 21A-21C illustrate the flow of blood inside the glucose sensor shown in Fig. 20, where Fig. 21A is a cross-sectional view showing an end portion of the glucose sensor of Fig.20, while Figs. 21B and 21C are plan views showing the same end portion of the glucose sensor with its cover removed.

### BEST MODE FOR CARRYING OUT THE INVENTION

Referring to the accompanying drawings, glucose sensors according to a first to a third embodiments of the present invention will be specifically described hereunder.

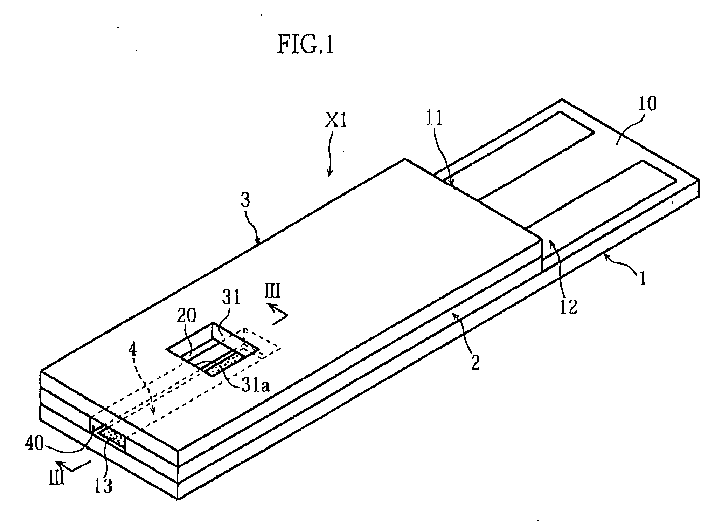

Referring first to Figs. 1 to 4, description will be given on the glucose sensor according to the first embodiment.

The glucose sensor X1 shown in Figs. 1 to 4 is of a disposable type, designed for use with a concentration measuring instrument (not shown). The glucose sensor X1 includes a substrate 1 of a narrow rectangular shape, and a cover 3 stacked thereon via a spacer 2. In the glucose sensor X1, the elements 1 to 3 define a flow path 4 extending longitudinally of the substrate 1. The flow path 4 serves to move a blood introduced thereinto through an opening (intake port) 40 in a longitudinal direction of the substrate 1 by a capillary action, and to retain the introduced blood.

The spacer 2 determines a distance between an upper surface 10 of the substrate 1 and a lower surface 30 of the cover 3, i.e. a height of the flow path 4. The spacer 2 includes a slit 20 which is open at an edge of the spacer 2. The slit 20 determines a widthwise dimension of the flow path 4, and the opening of the slit 20 at the edge of the spacer 2 constitutes the intake port 40 through which the blood is introduced into the flow path 4. The spacer 2 may be made of an acrylic emulsion based material, for example.

The cover 3 includes a through-hole 31. The through-hole 31 serves as a port through which a gas inside the flow path 4 is discharged outward, and has a rectangular shape. The through-hole 31 includes an edge 31a extending widthwise of the flow path (transversely of the substrate 1) on the side of the intake port 40. The surfaces of the cover 3 are more hydrophilic than those of the spacer 2. The cover 3 may be made of a hydrophilic material such as vinylon, or a hydrophilizing treatment may be applied to the surface of the cover 3 facing the flow path 4. Examples of hydrophilizing treatment include irradiation of UV light, and application of a surfactant such as lecithin.

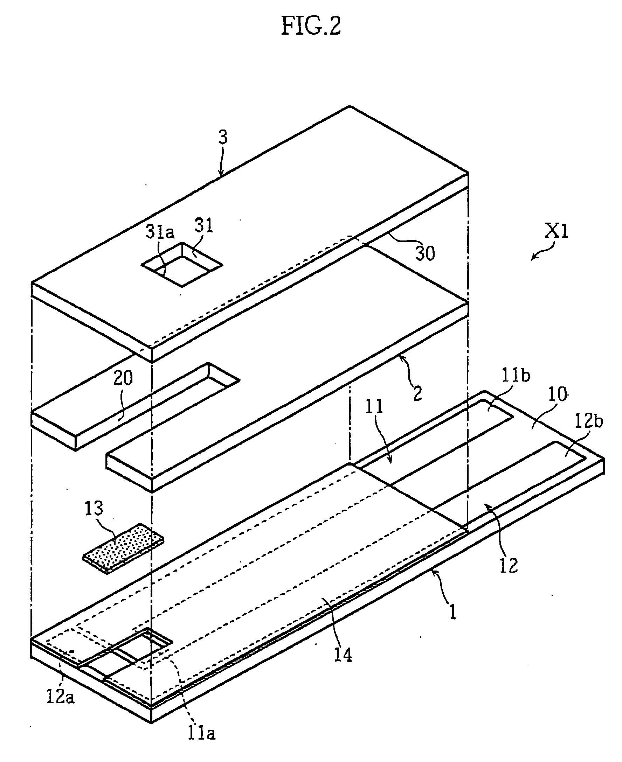

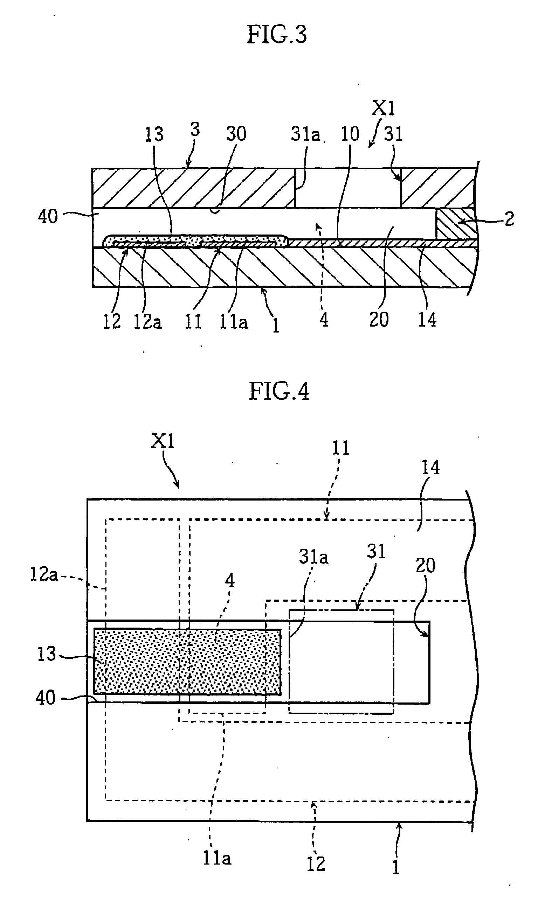

As is apparent in Figs. 2 and 3, the substrate 1 is provided with a working electrode 11, a counter electrode 12 and a reagent section 13 on the upper surface 10. The working electrode 11 and the counter electrode 12 extend longitudinally of the substrate 1, as a whole. The working electrode 11 and the counter electrode 12 have end portions 11a, 12a extending widthwise of the substrate 1 and facing each other longitudinally of the substrate 1. The other end portions 11b, 12b of the working electrode 11 and the counter electrode 12 constitute terminal portions, disposed in contact with terminals provided in the concentration measuring instrument (not shown). The upper surface 10 of the substrate 1 is covered with an insulating film 14 leaving exposed the end portions 11a, 11b, 12a, 12b of the working electrode 11 and the counter electrode 12. The insulating film 14 may be made of a UV-curing resin containing a water-repellent agent for example, so as to have a highly hydrophobic property.

The reagent section 13 is disposed so as to bridge over the end portions 11a and 12a of the working electrode 11 and the counter electrode 12, and made up as a solid containing an electron carrier and a relatively small amount of oxidoreductase. The reagent section 13 is readily soluble in blood. Accordingly, when a specimen such as blood is introduced into the flow path 4, the specimen can smoothly move along the surface of the substrate 1, and a liquid phase reaction system containing the electron carrier, oxidoreductase and glucose is formed inside the flow path 4.

Examples of oxidoreductase include glucose oxidase (GOD) and glucose dehydrogenase (GDH), typically PQQGDH. Examples of electron carrier include a ruthenium complex and an iron complex, typically [Ru(NH₃)₆]Cl₃ and K₃[Fe(CN)₆].

The measurement of the glucose via the glucose sensor X1 is automatically performed by the concentration measuring instrument (not shown), upon loading the glucose sensor X1 on the concentration measuring instrument (not shown), and providing the blood into the flow path 4 through the intake port 40 of the glucose sensor X1.

When the glucose sensor X1 is loaded on the concentration measuring instrument (not shown), the working electrode 11 and the counter electrode 12 of the glucose sensor X1 contact the terminals (not shown) of the concentration measuring instrument. Accordingly, the working electrode 11 and the counter electrode 12 can be utilized for applying a voltage across the liquid phase reaction system formed upon introduction of the blood, and a response current against the applied voltage is measured. Also, when the blood is introduced into the flow path 4, the blood advances from the intake port 40 toward the through-hole 31 by the capillary action taking place in the flow path 4. During such advancing movement of the blood, the reagent section 13 is dissolved in the blood, so that the liquid phase reaction system is formed inside the flow path 4.

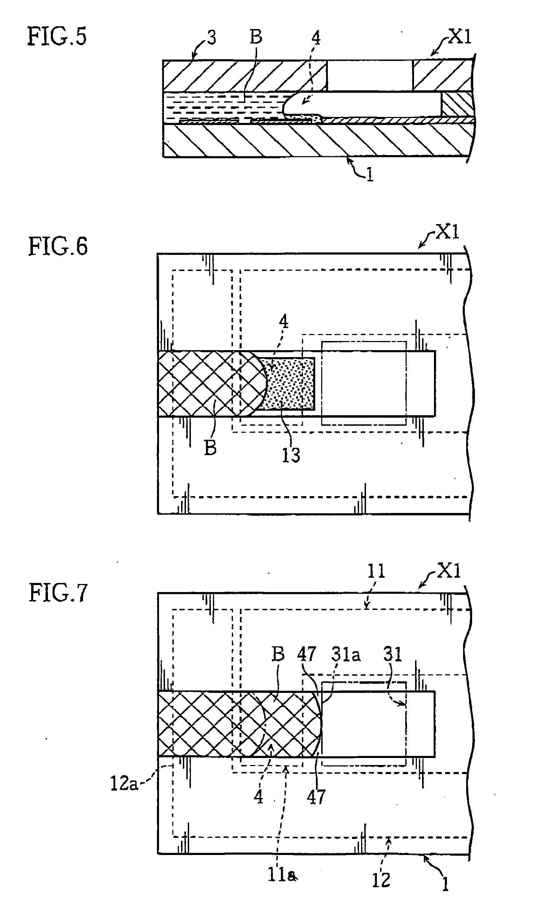

In the glucose sensor X1, the surface of the cover 3 facing the flow path 4 is hydrophilized, and the highly soluble reagent section 13 is provided on the substrate 1. Accordingly, the blood advances more easily along the surfaces of the substrate 1 and the cover 3 facing the flow path 4, than along the surfaces of the spacer 2 facing the flow path 4. Along the flow path 4, therefore, a portion of the blood B closer to the surfaces of the substrate 1 and the cover 3 advances faster than a central portion of the blood B, when viewed sidewise as shown in Fig. 5. By contrast, when viewed from above as shown in Fig. 6, a central portion of the blood B in the widthwise direction of the flow path 4 advances faster than side edge portions. The travel of the blood B finishes when the blood reaches the edge 31a of the through-hole 31, as shown in Fig. 7.

In the liquid phase reaction system, the oxidoreductase specifically reacts with the glucose in the blood so that electrons are removed from the glucose, and electrons are transferred to the electron carrier to provide a reduced form of the electron carrier. When a voltage is applied to the liquid phase reaction system via the working electrode 11 and the counter electrode 12, electrons are transferred from the reduced electron carrier to the working electrode 11. Accordingly, the concentration measuring instrument can measure the amount of electrons provided to the working electrode 11 in the form of a response current. The concentration measuring instrument (not shown) calculates the blood glucose level based on the response current measured upon lapse of a predetermined time after the introduction of the blood into the flow path 4.

In the glucose sensor X1, the through-hole 31 is rectangular, and the edge 31a of the through-hole 31 serving to stop the travel of the blood extends rectilinearly widthwise of the flow path 4. Accordingly, as is apparent upon comparison of Figs. 7 and 21C, the glucose sensor X1 is less prone to produce a void 47(97) where the blood is absent, at the side edge portions of the flow path 4 (95) than the glucose sensor with the circular through-hole (discharge port 95b). Further, even if the void is produced at all, the volume is much smaller in the glucose sensor X1. In the glucose sensor X1, therefore, the blood B is less likely to move toward the void 47 once it stops moving, and if the blood B might ever move, the movement would be smaller. This leads to minimized possibility that the amount (concentration) of the electron carrier present around the end portion 11a of the working electrode 11 fluctuates drastically, and the measurement of the response current provides a value closer to a theoretically correct value. Consequently, the glucose sensor X1 provides higher reproducibility in the measurement of the response current, and hence higher reproducibility in the blood glucose level measurement.

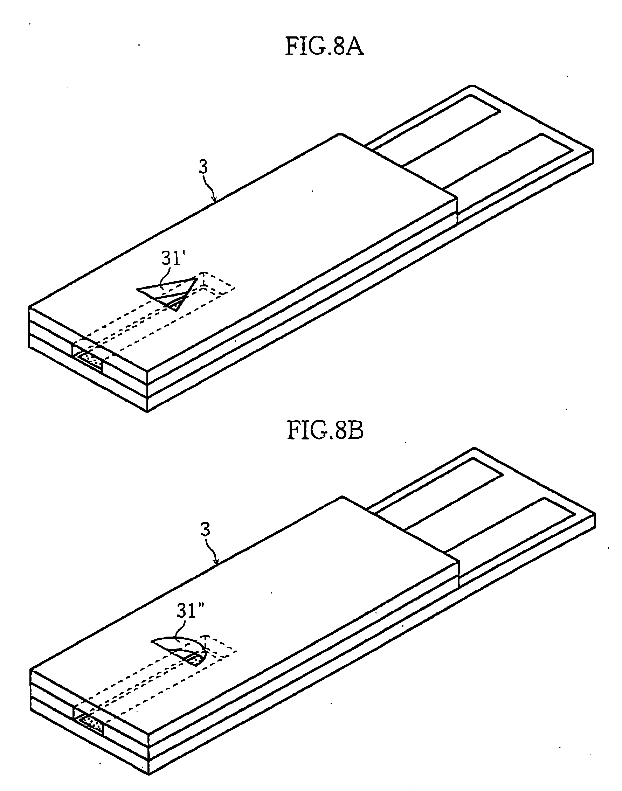

While the through-hole 31 of the cover 3 in the glucose sensor X1 is rectangular, the foregoing advantage can be obtained provided that the edge of the through-hole that stops the travel of the blood extends rectilinearly along the widthwise direction of the flow path. Accordingly, the through-hole may be triangular, semicircular or otherwise shaped, like the through-hole 31' in Fig. 8A or through-hole 31" in Fig. 8B.

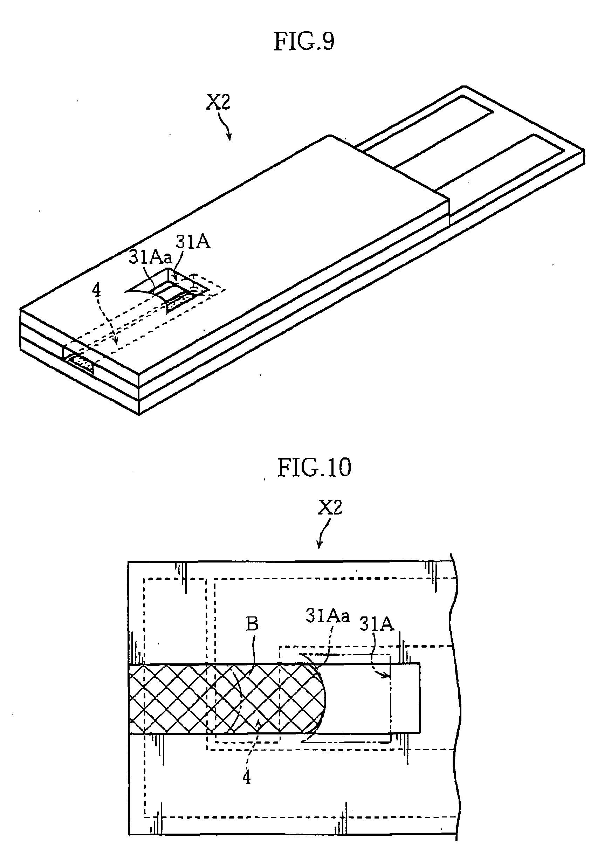

Now referring to Figs. 9 and 10, a glucose sensor according to the second embodiment of the present invention will be described hereunder. In these drawings, the same elements as those in the glucose sensor X1 already described are given the identical numerals, and a duplicating description will be omitted.

The glucose sensor X2 shown in Figs. 9 and 10 is different from the glucose sensor X1 according to the foregoing first embodiment (Ref. Fig. 1), with respect to the shape of the through-hole 31A of the cover 3. The through-hole 31A includes an edge 31Aa for stopping the travel of the blood, formed in an arc shape concave in the blood moving direction.

As already stated, when the blood is introduced into the flow path 4, the central portion of the blood in the widthwise direction of the flow path 4 advances faster than the side edge portions, and hence the front edge of the moving blood forms an arc shape. Therefore, forming the edge 31Aa of the through-hole 31A for stopping the travel of the blood in an arc shape concave in the moving direction of the blood allows simultaneously stopping the travel of the blood along the entire edge 31Aa. Such a configuration, consequently, further minimizes the likelihood of emergence of a void (47) where the blood B is absent at the side edge portions of the flow path 4, compared with the glucose sensor X1 including the through-hole 31 having the rectilinear edge 31a as shown in Fig. 7. Further, even if a void (47) is produced at all, the volume of the void becomes additionally smaller. As a result, the glucose sensor X2 provides still higher reproducibility in the measurement of the response current, and hence higher reproducibility in the blood glucose level measurement.

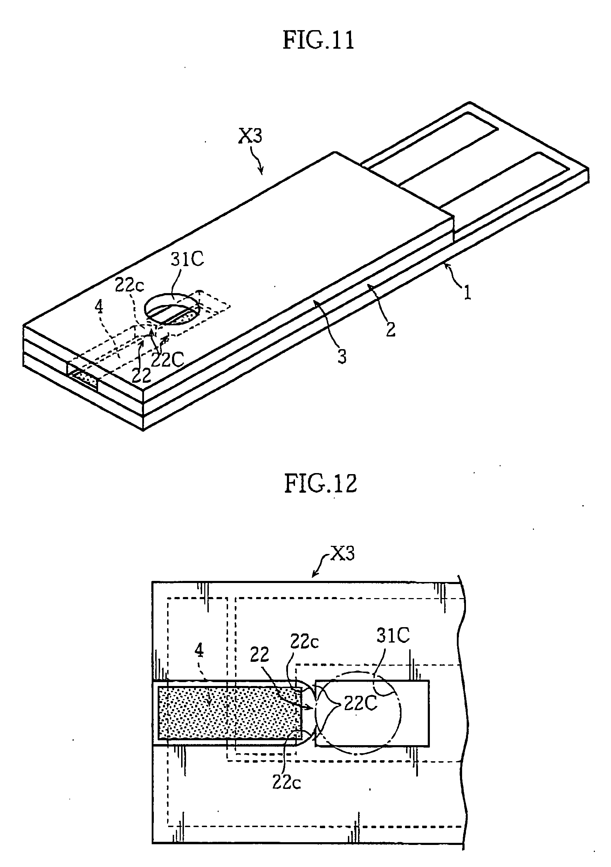

Proceeding now to Figs. 11 and 12, a glucose sensor according to the third embodiment of the present invention will be described hereunder.

The glucose sensor X3 shown in Figs. 11 and 12 is provided with a stopper section 22 at the end portion of the flow path 4 in the moving direction of the blood. The stopper section 22 includes a pair of projections 22C formed on the spacer 2. The projections 22 project toward an inner portion widthwise of the flow path 4, and respectively include an arcuate stopper wall 22c.

The stopper section 22 is located at the end portions in the widthwise direction, and at the end portion in the longitudinal direction of the flow path 4. Such location of the stopper section 22 corresponds to where a void may be produced (Ref. Fig. 7). Accordingly, providing the stopper section 22 inhibits the emergence of a void in the flow path 4 after the introduction of the blood.

To ensure that such advantage is achieved, it is preferable to form the stopper section 22 in such a shape that the portion of the blood moving along the side edge portions of the flow path 4 contact the stopper section before or at the same time that the central portion of the moving blood in the widthwise direction of the flow path 4 reaches the edge of the discharge port 31C.

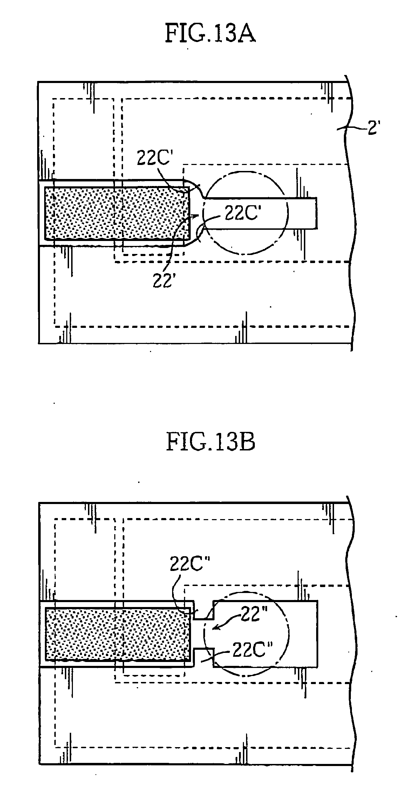

The configuration of the stopper section 22 is not limited to the foregoing. For example as shown in Fig. 13A, stepped portions 22C' may be provided to the spacer 2' so as to form a stopper section 22', or rectangular projections 22C" may be provided so as to constitute a stopper section 22" as shown in Fig. 13B, and so forth.

The present invention is not limited to the glucose sensor according to the foregoing first to the third embodiments. The present invention may be embodied as a glucose sensor for measuring glucose in a specimen other than blood, or as an analyzing tool for an ingredient other than glucose in blood or an ingredient other than glucose in a specimen other than blood.

### EXAMPLES

The following description is given to prove that a glucose sensor according to the present invention provides improved reproducibility in response current measurement.

### [Preparation of Glucose Sensor]

The glucose sensors employed in Inventive Examples 1 to 3 and in comparative examples 1 to 3 was prepared basically in a similar manner, with respect to the substrate and the elements provided thereon (Ref. Fig. 2). Firstly, a working electrode and a counter electrode were formed on the substrate made of PET resin, by screen printing utilizing a carbon ink. Then, the substrate was covered with an insulating film made of a UV-curing resin having a contact angle of 95 degrees, leaving exposed the end portions of both the working electrode and the counter electrode. This was followed by formation of a dual-layer reagent section including an electron carrier layer and an enzyme layer. The electron carrier layer was formed by first applying 0.4 µL of a first material solution containing an electron carrier to the surface of the substrate where the working electrode and the counter electrode were exposed, and by blow-drying the applied first material solution (at 30 °C and 10% Rh). The enzyme layer was formed by applying 0.3 µL of a second material solution containing an oxidoreductase to the electron carrier layer, and then blow-drying the applied second material solution (at 30 °C and 10% Rh).

The first material solution was prepared by mixing the materials denoted by 1 to 4 in Table 1 below in the numbered order and leaving the mixture standing for 1 to 3 days, after which the electron carrier was added to the mixture. As the electron carrier, [Ru(NH₃)₆]Cl₃ ("LM722" available from Dojindo Laboratories) was employed.

**TABLE 1:**

| Composition of 1st Material Solution (Excluding Electron Carrier) | | | | | | |
|---|---|---|---|---|---|---|
| ①SWN Solution | | ②CHAPS Solution | | ③ Distilled Water | ④ACES Solution | |
| Concentration | Volume | Concentration | Volume | | Concentration | Volume |
| 1.2% | 250µL | 10% | 25µL | 225µL | 220mM | 500µL |

In Table 1 and the passages to follow, SWN represents Lucentite SWN, whereas CHAPS represents 3-[(3-cholamidopropyl)dimethylammonio]propanesulfonic acid. ACES is N-(2-acetamido)-2-aminoethanesulfonic acid. As the SWN, "3150" available Co-Op Chemical Co., Ltd. was employed, as the CHAPS, "KC062" manufactured by Dojindo Laboratories, and as the ACES, "ED067" manufactured by Dojindo Laboratories, respectively. The ACES solution was prepared so as to have a pH value of 7.5.

The second material solution was prepared by dissolving the oxidoreductase in a 0.1% CHAPS solution. As the oxidoreductase, a PQQGDH having an oxygen activity of 500 U/mg was employed.

Finally an acrylic emulsion based adhesive was applied to the insulating film except on the reagent section, and then a cover was stacked thereon, thus making up the glucose sensor.

### <Inventive Example 1>

In this inventive example, the reproducibility was evaluated based on time course data of response current. The glucose sensor employed includes, as shown in Table 2, a cover of 270 µm in thickness provided with a rectangular through-hole (discharge port), and a flow path of 2.84 mm in Length, 1.5 mm in Width and 0.06 mm in Height, defined by a spacer.

The time course data of response current was measured 30 times with respect to three types of blood containing 400 mg/dL of glucose but of different Hct values (specifically 20%, 42% and 70%).

The voltage to be applied between the working electrode and the counter electrode was set at 200 mV, and the application of the voltage was started at 5 seconds after starting the introduction of the blood, and the response current was measured at every 50 msec after starting the voltage application.

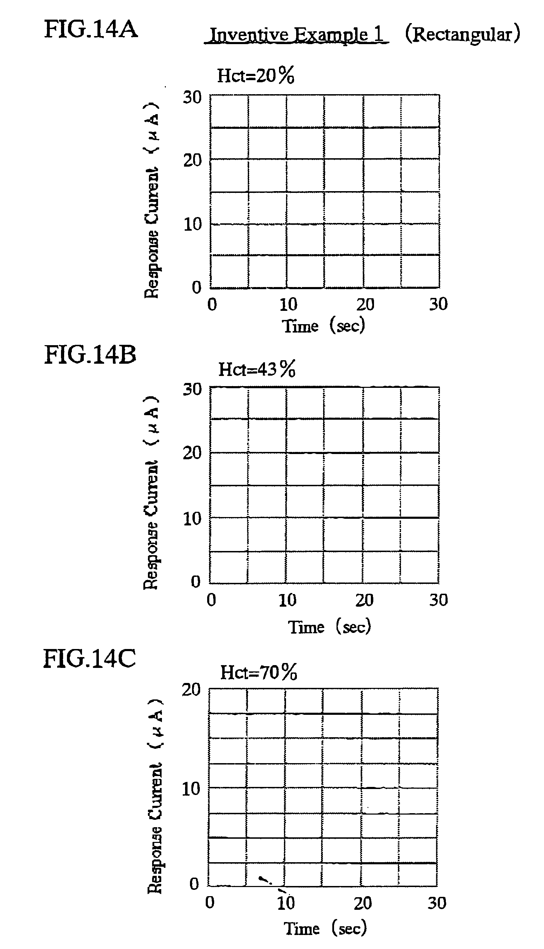

The measurement results of the time course data are shown in Figs. 14A to 14C, and the fluctuation occurrence rate along the time course is shown in Table 2.

### <Inventive Example 2>

In this inventive example, the response current was measured similarly to the inventive example 1, except that a cover of 200 µm in thickness was employed.

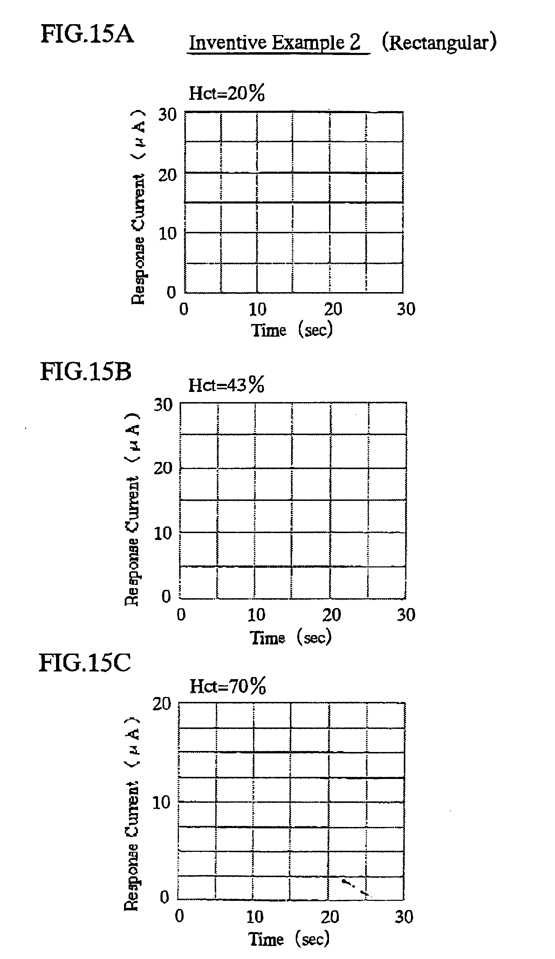

The measurement results of the time course data are shown in Figs. 15A to 15C, and the fluctuation occurrence rate along the time course is shown in Table 2.

### <Inventive Example 3>

In this inventive example, the response current was measured similarly to the inventive example 1, except that a glucose sensor including a cover provided with a through-hole (discharge port) as shown in Figs. 9 and 10 was employed. The edge of the through-hole for stopping the travel of the blood was formed in an arcuate shape of 1 mm in curvature radius, concave in the moving direction of the blood.

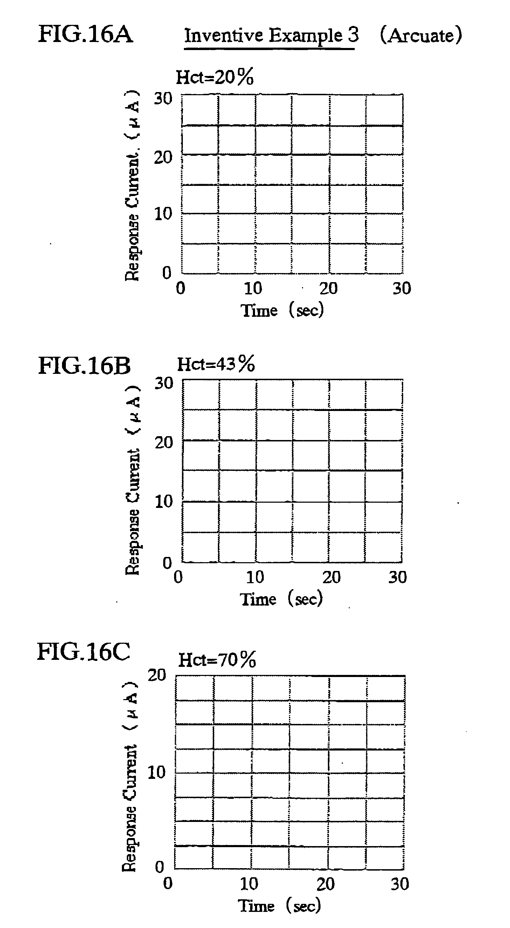

The measurement results of the time course data are shown in Figs. 16A to 16C, and the fluctuation occurrence rate along the time course is shown in Table 2.

### <Comparative Example 1>

In this comparative example, the response current was measured similarly to the inventive example 1, except that a glucose sensor including a cover provided with a circular through-hole (discharge port) of 2 mm in diameter was employed, as shown in Table 2.

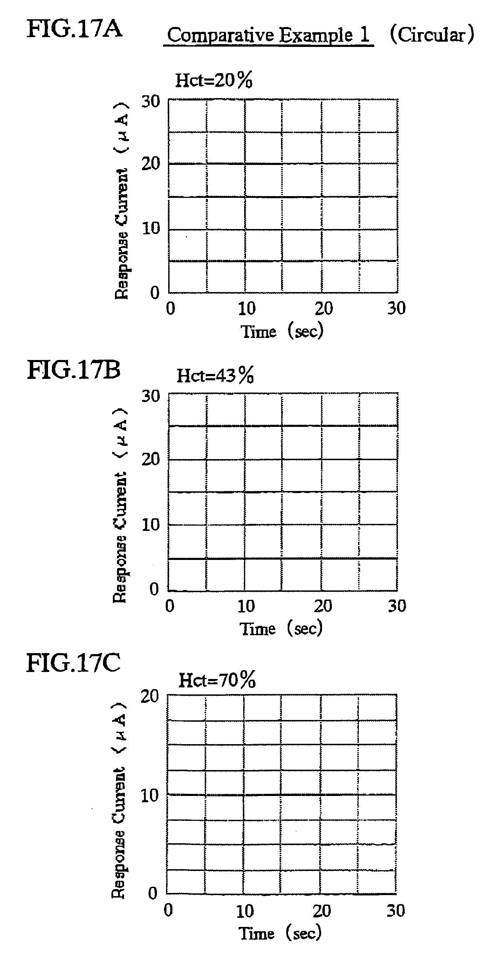

The measurement results of the time course data are shown in Figs. 17A to 17C, and the fluctuation occurrence rate along the time course is shown in Table 2.

### <Comparative Example 2>

In this comparative example, the response current was measured similarly to the comparative example 1, except that a glucose sensor including a flow path of 2.60 mm in length was employed, as shown in Table 2.

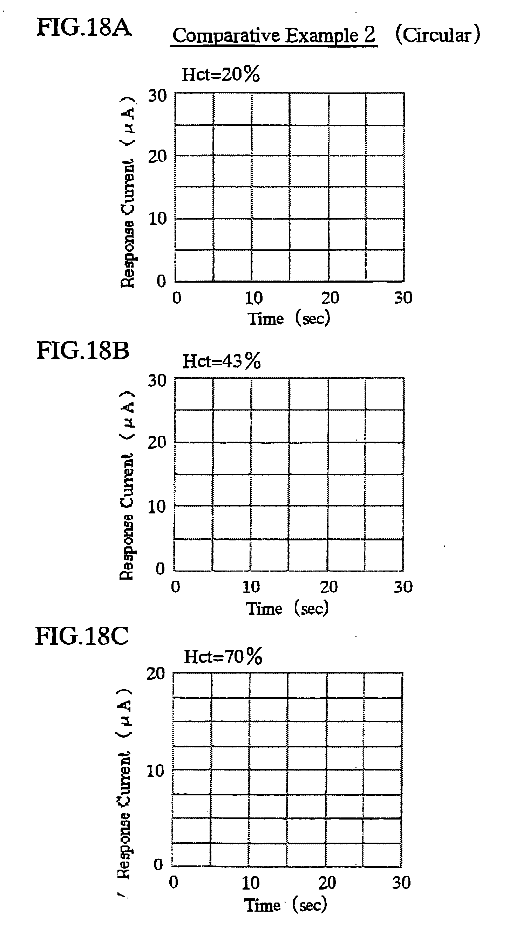

The measurement results of the time course data are shown in Figs. 18A to 18C, and the fluctuation occurrence rate along the time course is shown in Table 2.

### <Comparative Example 3>

In this comparative example, the response current was measured similarly to the comparative example 1, except that a glucose sensor including a cover of 200 µm in thickness and a flow path of 2.60 mm in length was employed, as shown in Table 2.

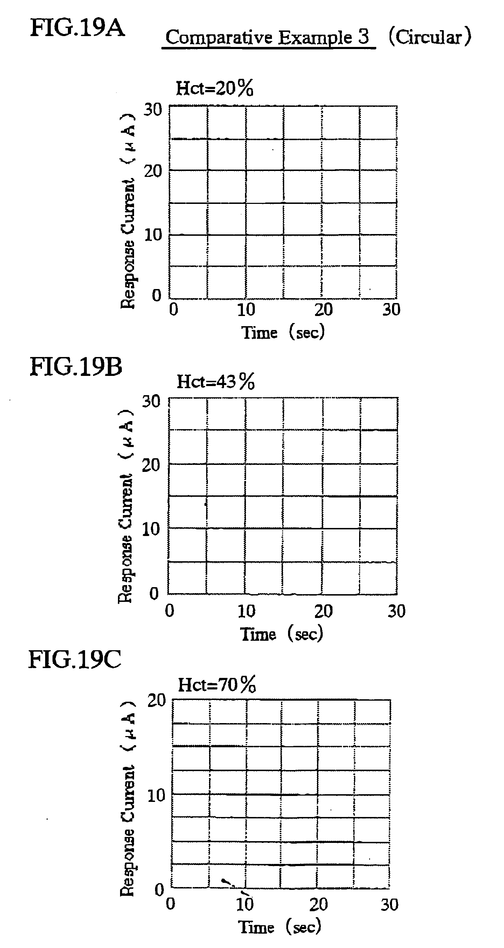

The measurement results of the time course data are shown in Figs. 19A to 19C, and the fluctuation occurrence rate along the time course is shown in Table 2.

**TABLE 2**

| | Cover Structure | | Flow Path Dimensions [mm] | | | Fluctuation Occurrence Rate[%] | | |
|---|---|---|---|---|---|---|---|---|
| | Thick -ness | Discharge port shape | L | W | H | Hct 20 | Hct 43 | Hct 70 |
| Inventive Ex. 1 | 270µm | Rectangular | 2.84 | 1.5 | 0.06 | 0 | 0 | 0 |
| Inventive Ex. 2 | 270µm | Rectangular | 2.84 | 1.5 | 0.06 | 0 | 0 | 0 |
| Inventive Ex. 3 | 270µm | Arcuate | 2.84 | 1.5 | 0.06 | 0 | 0 | 0 |
| Comparative Ex. 1 | 270µm | Circular | 2.84 | 1.5 | 0.06 | 20 | 10 | 10 |
| Comparative Ex. 2 | 270µm | Circular | 2.60 | 1.5 | 0.06 | 10 | 3.3 | 0 |
| Comparative Ex. 3 | 270µm | Circular | 2.60 | 1.5 | 0.06 | 10 | 3.3 | 0 |

As is apparent in view of the comparative examples 1 to 3, glucose sensors including the circular through-hole (discharge port) have caused considerable fluctuation in the time course data of the response current. In contrast, as is evident from the inventive examples 1 to 3, the glucose sensors including the through-hole (discharge port) having an upstream side edge formed in a rectilinear shape, or an arc shape recessed toward a downstream side, have not caused fluctuation in the time course data of the response current. This shows that forming the edge of the discharge port for stopping the travel of the blood along the flow path in a rectilinear or a concave arc shape provides excellent reproducibility in the measurement of the response current value.

## Claims

1. A vented analyzing tool, comprising a flow path provided on a substrate so as to move a specimen in a specific direction;
the flow path having a predetermined dimension in a widthwise direction orthogonal to the specific direction when viewed thicknesswise of the substrate, and the analyzing tool further including a discharge port through which gas inside the flow path is vented;
wherein an edge of the discharge port on an upstream side in the moving direction of the specimen includes a rectilinear portion extending in the widthwise or generally widthwise direction.

2. The vented analyzing tool according to claim 1, wherein the flow path is designed to cause a central portion of the specimen in the widthwise direction to move faster than remaining portions thereof.

3. The vented analyzing tool according to claim 1, wherein the rectilinear portion has a dimension equal or generally equal to, or larger than the widthwise dimension of the flow path.

4. The vented analyzing tool according to claim 1, wherein the discharge port is polygonal.

5. The vented analyzing tool according to claim 2, further comprising a cover stacked on the substrate, so that the substrate and the cover define the flow path;
wherein the cover is provided with a through-hole penetrating in the thicknesswise direction to constitute the discharge port.

6. The vented analyzing tool according to claim 5,
wherein the cover is stacked on the substrate via a spacer;
the spacer also defines the flow path together with the substrate and the cover, and
a portion of the flow path corresponding to the spacer is more hydrophobic than portions corresponding to the substrate and the cover.

7. The vented analyzing tool according to claim 1, wherein the flow path moves the specimen by capillary action.

8. A vented analyzing tool, comprising a flow path provided on a substrate so as to move a specimen in a specific direction;
the flow path having a predetermined dimension in a widthwise direction orthogonal to the specific direction when viewed thicknesswise of the substrate, the analyzing tool further including a discharge port through which gas inside the flow path is vented;
wherein the flow path is designed so as to cause a central portion of the specimen in the widthwise direction to move faster than remaining portions thereof, and
a central portion of an edge of the discharge port on an upstream side in the moving direction of the specimen is concave toward a downstream side in the moving direction of the specimen, with respect to the widthwise end portions.

9. The vented analyzing tool according to claim 8, wherein the concave portion is arcuate.

10. The vented analyzing tool according to claim 8, further comprising a cover stacked on the substrate, so that the substrate and the cover define the flow path;
wherein the cover is provided with a through-hole penetrating in the thicknesswise direction thus to constitute the discharge port.

11. The vented analyzing tool according to claim 10,
wherein the cover is stacked on the substrate via a spacer;
the spacer also defines the flow path together with the substrate and the cover, and
a portion of the flow path corresponding to the spacer is more hydrophobic than portions corresponding to the substrate and the cover.

12. The vented analyzing tool according to claim 8, wherein the flow path moves the specimen by capillary action.

13. A vented analyzing tool, comprising a flow path provided on a substrate so as to move a specimen in a specific direction;
the flow path having a predetermined dimension in a widthwise direction orthogonal to the specific direction when viewed thicknesswise of the substrate, and further including a discharge port through which a gas inside the flow path is discharged;
wherein a portion of the edge of the discharge port on an upstream side in the moving direction of the specimen conforms in shape to a front end portion of the specimen moving inside the flow path when viewed thicknesswise of the substrate.

14. The vented analyzing tool according to claim 13, wherein the flow path moves the specimen by capillary action.

15. A vented analyzing tool, comprising a flow path provided on a substrate so as to move a specimen in a specific direction;
the flow path having a predetermined dimension in a widthwise direction orthogonal to the specific direction when viewed thicknesswise of the substrate, and the analyzing tool further including a discharge port through which a gas inside the flow path is vented;
wherein the flow path is constituted so as to cause a central portion of the specimen in the widthwise direction to move faster than remaining portions thereof, and
wherein the flow path includes one or more stoppers located at an end portion including a portion corresponding to the discharge port, so as to block a flow of the specimen at end portions in the widthwise direction inside the flow path.

16. The vented analyzing tool according to claim 15, further comprising a cover stacked on the substrate via a spacer provided with a slit, so that the substrate, the spacer and the cover define the flow path;
wherein the one or more stoppers are formed by making the slit narrower in the widthwise direction at a position close to the discharge port, inside a portion defining the flow path, than in a portion close to an intake port of the specimen.

17. The vented analyzing tool according to claim 15, wherein the one or more stoppers include a first stopper and a second stopper projecting in the widthwise direction toward an inner portion of the flow path, so as to oppose each other with an interval.

18. The vented analyzing tool according to claim 17, wherein the first and the second stoppers include a rectilinear portion on an upstream side in the moving direction of the specimen, extending in the widthwise or generally widthwise direction.

19. The vented analyzing tool according to claim 17, wherein the first and the second stoppers include an arcuate portion, on an upstream side in the moving direction of the specimen.

20. The vented analyzing tool according to claim 15, wherein the flow path moves the specimen by capillary action.
